# DEMANDE DE BREVET EUROPEEN

(11) **EP 0 533 544 A1**
(43) Date de publication de la demande: **24.03.1993**
(21) Numéro de dépôt: 92402508.3
(22) Date de dépôt: 14.09.1992
(51) Int. Cl.: G06K 9/20, G06F 15/403

(54) **Procédé et dispositif de traitement d'informations alphanumériques et graphiques pour la constitution d'une banque de données**

(30) Priorité: 16.09.1991 FR 9111378
(71) Demandeur: AEROSPATIALE Société Nationale Industrielle, F-75781 Paris Cédex 16 (FR)
(72) Inventeur: Vinsonneau, Daniel, F-06110 Le Cannet (FR); Plantier, Jean-François, F-06000 Nice (FR); Finck-Bertheux, Isabelle, F-06330 Roquefort les Pins (FR)
(74) Mandataire: Dubois-Chabert, Guy

(57) **Abrégé**

L'invention concerne un procédé et un dispositif de traitement d'informations alphanumériques et graphiques enregistrées sur un support sous forme de pages pour constituer une banque de données interrogeable et obtenir l'édition d'informations, dans lequel on réalise de façon automatique les étapes suivantes :
A) détermination de pages images numérisées ;
B) une première phase de traitement des pages images numérisées permettant : la vérification que ces pages sont séquentielles, la détermination d'éléments caractéristiques de chaque page, la determination de l'angle de déviation, la fabrication de masque, un fenêtrage, la rectification de l'alignement, l'identification d'éléments caractéristiques ;la segmentation des images ; l'enregistement sur des fichiers distincts des pages images numérisées, des entités images numérisées, des images segmentées numérisées susceptibles d'être éditées ;
C) une deuxième phase de traitement consistant à réaliser une reconnaissance optique de caractères des pavés relatifs aux informations alphanumériques à partir des images segmentées et enregistrement des données sur un fichier constituant une banque de données interrogeable.

## Description

La présente invention concerne un procédé et un dispositif de traitement d'informations alphanumériques et graphiques enregistrées sur un support sous forme de pages, pour la constitution d'une banque documentaire de données interrogeable.

On entend par support, des moyens d'enregistrement d'informations tels que des documents papiers que l'on nommera par la suite catalogues ou des moyens d'enregistrements électroniques par exemple les CD-ROM.

On rappelle que les informations sont présentes sur de tels supports sous la forme de pages de format A4 et B5 généralement.

L'accès à une banque de données documentaire résidant sur un serveur de banque de données ou sur un ordinateur se fait par interrogation à partir de mots clés ou codes rentrés par des moyens informatiques tels qu'un ordinateur. Ces moyens sont reliés éventuellement par réseau au serveur lorsque la banque de données est gérée par un serveur.

Lorsqu'un document est enregistré sur une banque de données, il a subi au préalable des traitements. Ces traitements consistent notamment lorsque les volumes d'informations sont importants, à saisir ces informations manuellement au moyen d'un clavier ou électroniquement au moyen d'une caméra ou d'un scanner, afin d'obtenir chaque page saisie sous la forme d' une matrice de pixels.

Le terme anglo-saxon de "bitmap" couramment employé traduit ce que l'on entend ici par matrice de pixels.

L'ensemble de ces traitements portent bien entendu sur des informations alphanumériques et graphiques, et sont complétés par un ultime traitement qui permet de transformer les matrices de pixels représentatives du texte en un format tel que le code ASCII.

Cette transformation consiste en une reconnaissance optique des caractères. Les informations sont ensuite enregistrées dans un fichier d'un serveur ou de tout autre ordinateur pour constituer une banque de données interrogeable.

Bien que de nombreuses méthodes aient été mises au point actuellement pour réaliser de la reconnaissance de caractères (dans le domaine notamment du dessin assisté par ordinateur), il n'y en a aucune qui soit satisfaisante lorsqu'elles sont utilisées pour la constitution de banques de données interrogeables par mot clés, du fait du taux important d'erreur que l'on trouve après édition du résultat de la recherche.

On pourra, à titre indicatif, se reporter à l'état de la technique constitué par les brevets :
- US 3,950,733 du 13 Avril 1976 de Cooper et al,
- US 4,044,243 du 23 Août 1977 de Cooper et al,
- US 4,254,474 du 3 Mars 1981 de Cooper et al,
- US 4,319,331 du 9 Mars 1982 de Elbaum et al,
- US 4,326,259 du 20 Avril 1982 de Cooper et al,
- US 4,760,604 du 26 Juillet 1988 de Cooper et al,
- US 4,897,811 du 30 Janvier 1990 de Scofield,
- US 4,926,064 du 15 mai 1990 de Tapan,
- US 4,958,375 du 18 Septembre 1990 de Reilly et al.,
- US 4,760,606 du 30 juin 1986 de Lesnick et al.,

dans lesquels sont décrits des algorithmes d'apprentissage utilisant des réseaux neuronaux pour faire de la reconnaissance de caractère.

On pourra également se reporter à l'état de la technique constitué par les documents suivants et qui constitue l'arrière plan technologique de l'invention :
- Archimag, N° 27, 1989, intitulé "La documentation de presse à Paribas" de Louise Guerre et qui concerne l'archivage électronique d'articles de presse pour l'élimination de support papier,
- ET L-0345 DU 28 novembre 1983, intitulé "A Test Statregy for High Resolution Image Scanners" de Armin W. Gruen, Ohio State University, 1958, Neil Ave, Columbus, OH 43210, qui concerne une étude des principaux défauts des scanners et des méthodes de test associées,
- International update May/june 1987, intitulé "New Technologies Demand New Standards for the Quality Control of Microfilm Images of Engineering Drawings" de Eric T. Wilson et qui concerne un contrôle qualité de microfilms en vue de l'emploi de méthode de balayage des microfilms pour la numérisation d'informations,
- September INFORM 1989, intitulé "Getting to the Source" de Phyllis H. Bruce, The Babcock & Wilcox Company, Nuclear Power Division, qui concerne une étude théorique sur la manière de produire des documents de qualité suffisante pour que les méthodes d'archivage par microfilms soient efficaces,
- May INFORM 1988, intitulé "Putting a Scanned Document Database to Work" de Berle E. Larned, relatif à un discours sur l'intérêt de l'archivage électronique de documents, de leur mise à jour régulière, de l'intérêt de techniques de reconnaissance de caractères et suggère l'indexation des documents de la base ASCII obtenue,
- July/August INFORM 1990, intitulé "Small Wonder in Delaware" de Cheryl Butler qui concerne la numérisation d'informations enregistrées sur des microfiches pour l'enregistrement sur disques optiques ; ce document révèle l'emploi de trente six personnes pour scanner les documents et constituer la base de données ; cette base est créée manuellement lors d'un contrôle visuel qui porte sur 4 000 000 de pages,
- July/August INFORM 1990, intitulé "Arco Products Produces" de Gregory E. Kaebnick, qui concerne l'archivage optique de dessins, l'indexation manuelle, un contrôle de qualité unitaire et manuel de 100 000 pages (travail qui prend dix personnes sur deux ans),
- Information Media & Technology, volume 23, N° 1, intitulé "Freedom 30 : Scanner-Independent ICR from Kurzweil" et qui concerne une présentation et des essais d'un système pour PC fabriqué par XEROX ; la technique de reconnaissance optique de caractères donne des résultats à 99,7 % dans les meilleurs cas, tolère 3 % de rotation, scanne les images sans envisager d'autre traitement sur les images numérisées obtenues,
- Special Report, May/June 1988, intitulé "Scanning, OCR Devices Complement Microfilm in Solving Data Entry Bottlenecks" de Michael C. Bida et qui concerne des généralités sur les archivages électroniques, la technique de reconnaissance optique de caractères, la séparation texte/image et une indexation automatique des documents archivés sur microfilms,
- 9th International Conference on Pattern Recognition (14 novembre 1988, Rome, IT, pages 739-743 ; G. CIARDIELLO : "An Experimental System for Office Document Handling and Text Recognition"),
- 6th International Conference on Pattern Recognition (1982, Munich, Allemagne, pages 496-500 ; K.Y. WONG et al. : "Document Analysis System").

On pourra aussi se reporter au document intitulé Annals of the CIRP Vol. 38/1/1989 qui décrit une technique de balayage ("scanning") et d'interprétation automatique de dessins industriels pour de la DAO (dessin assisté par ordinateur) sans faire intervenir de technique de reconnaissance de caractères.

D'autre part, les documents qui peuvent être utilisés pour une banque de données peuvent comporter des caractères alphanumériques mais aussi du graphisme (des dessins). Or, actuellement, il n'est pas d'usage de constituer une banque de données lorsqu'il s'agit d'enregistrer un assez grand volume de texte accompagné de graphisme. Lorsque c'est le cas, on est confronté au problème de la mauvaise qualité du texte après édition puisque ce sont les données obtenues après reconnaissance graphique qui sont utilisées pour l'édition.

Même si des méthodes permettant d'enregistrer des informations alphanumériques et du graphisme existent, leur usage est le plus souvent réservé à l'enregistrement de graphisme tel que des cartes topographiques.

On pourra, à titre indicatif, se reporter au document IEEE transaction on pattern analysis and machine intelligence, vol. II, n° 3, December 1989 dans lequel est décrite une méthode de segmentation de l'image en vue de permettre le stockage et l'accès à des cartes et des dessins. Il s'agit d'une segmentation avec niveaux de gris permettant de faire ressortir des détails particuliers par une méthode statistique et qui est sans rapport avec la notion de segmentation dont il sera question dans la présente demande.

On pourra également se reporter à l'état de la technique constitué par la demande de brevet internationale W090/09717 du 23 Août 1990, par la demande GB 2 191 281 A et par la demande européenne 0 258 577 qui décrivent des méthodes de traitement et de stockage d'informations alphanumériques ou de dessins qui ne sont pas adaptées à la constitution d'une banque de données (reflet exact du document d'origine) mise en place dans un serveur relié à des lignes de transmission du réseau de télécommunication pour permettre l'interrogation à distance.

L'inconvénient de telles méthodes provient en effet tout d'abord du taux d'erreur important qu'elles procurent et en outre du fait qu'elles sont très sensibles aux défauts que peut présenter le texte, qu'il s'agisse d'un mauvais graphisme des caractères ou d'un défaut de parallélisme ou de taches.

Par ailleurs, il est également impossible à l'heure actuelle de pouvoir accéder à des portions de contenu d'un document ou catalogue, à savoir d'éditer des paragraphes situés n'importe où dans le catalogue.

Les méthodes actuelles de traitement permettent d'accéder à la première page d'un catalogue ou bien au début d'une page, mais pas à des paragraphes quelconques d'une page ou du catalogue.

L'ensemble de ces inconvénients sont rencontrés notamment dans une application particulière qui est celle des banques de données de brevets d'invention.

Un article intitulé "A Rule-Based System for Document Image Segmentation" de J.L. Fisher, S.C. Hinds et D.P. D'Amato (10th Internationale Conference on Pattern Recognition, 16 juin 1990, Atlantic City, US, pages 567-572) énonce et suggère les opérations suivantes exécutées séquentiellement :
- digitalisation au moyen d'un scanner,
- correction de parallaxe par rotation (ou équivalence de rotation) de l'image,
- fenêtrage,
- segmentation,
- coupé-collé,
- stockage sur support magnétique.

Pour bien fenêtrer un document particulier situé à l'intérieur d'une page digitalisée il semble évident de redresser l'image et de fenêtrer ce document après. Sinon le texte peut être coupé en diagonale lors du fenêtrage.

Les documents que nous avons à digitaliser comportent tous un indicateur horizontal qui nous permet de calculer l'angle de rotation. La fenêtre d'extraction d'une page est donc inclinée de cet angle, ce qui permet d'extraire sans faire tourner toute la page. Une segmentation pourrait donc être exécutée sans cette rotation. C'est l'objet de la présente invention.

La description qui va être faite de l'invention est faite à titre illustratif mais non limitatif pour cette application particulière.

La présente invention a donc pour but de remédier aux problèmes qui viennent d'être énoncés.

Ces anomalies sont les suivantes :
- anomalie de digitalisation,
- problème de réglage du scanner,
- qualité de digitalisation,
- indexation manuelle,
- exécution manuelle de contrôle de réglage,
- document d'origine digitalisé mal indexé (où l'OCR a généré une faute d'orthographe).

La présente invention offre un compromis qui permet de limiter ces anomalies.

La présente invention a pour objet un procédé de traitement d'informations alphanumériques et graphiques permettant de constituer une banque de données interrogeable par mot clés ou par le numéro d'identification de l'entité à consulter, cette interrogation se faisant sur un fichier obtenu à partir de techniques de reconnaissance de caratères et l'édition du document consulté se faisant à partir d'un autre fichier obtenu avant tout traitement de reconnaissance de caractères (fichier image BITMAP du document original).

La présente invention a plus précisément pour objet un procédé de traitement d'informations alphanumériques et graphiques enregistrées sur un support sous forme de pages pour constituer une banque de données interrogeable par des moyens d'interrogation et obtenir l'édition d'informations par des moyens d'édition, caractérisé en ce qu'il comporte les étapes automatiques suivantes :
A) détermination de pages images numérisées sous forme de matrices de pixels à partir des informations alphanumériques et graphiques enregistrées sur le support ;
B) une première phase de traitement des pages images numérisées comprenant :
   - la vérification que ces pages sont bien séquentielles,
   - la détermination d'éléments caractéristiques sur chaque page image numérisée permettant de découper les informations en blocs et l'identification des repères de pages,
   - la détermination par calcul de l'angle de rotation qu'il faut appliquer à chaque partie d'image numérisée comportant seulement du texte pour la redresser,
   - la fabrication, pour certains éléments caractéristiques de chaque page image numérisée, d'un masque que l'on s'attend à trouver à .la page suivante,
   - un fenêtrage par détermination, à partir de ces éléments caractéristiques et des repères de pages, de blocs d'informations, contenus sur une ou plusieurs pages, relatifs à une même entité et la constitution d'une image numérisée par entité,
   - la rectification de l'alignement des lignes d'écriture à partir des éléments caractéristiques déterminés précédemment,
   - l'identification d'éléments caractéristiques de chaque entité numérisée correspondant à une image par comparaison avec des masques attendus et calculés à l'avance,
   - la segmentation des images de manière à identifier les pavés correspondant à des portions de contenu, de façon à les enregistrer séparément pour pouvoir les recomposer selon une mise en page désirée,
   - l'enregistrement sur fichiers des pages images numérisées, des entités images numérisées, des images segmentées numérisées susceptibles d'être éditées ;
C) une deuxième phase de traitement consistant à réaliser une reconnaissance optique de caractères des pavés relatifs aux informations alphanumériques à partir des images segmentées et enregistrement des données sur un fichier constituant une banque de données interrogeable.

Selon une autre caractéristique avantageuse, l'étape A comporte en outre une étape de pré-indexation consistant à connaître le nombre de pages du document initial numérisé et les numéros de la première et de la dernière entités qui se trouvent sur ce document.

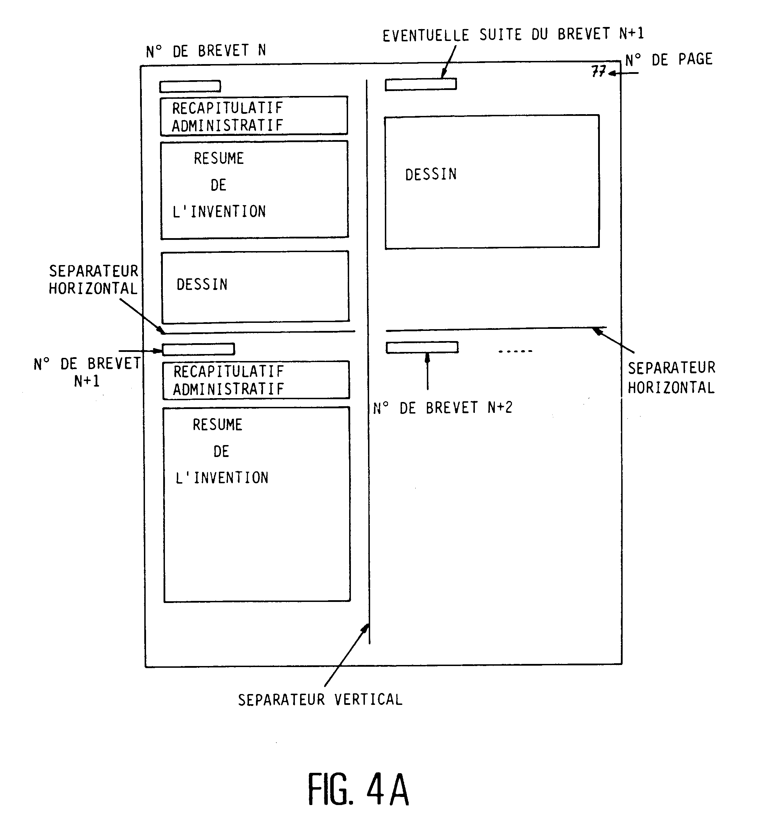

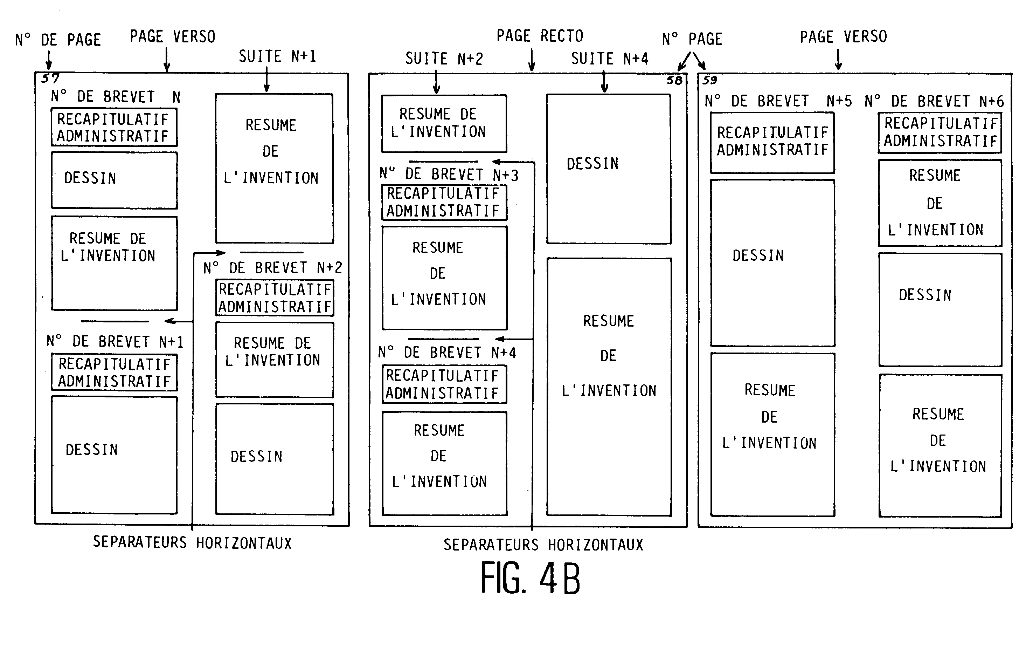

Selon une autre caractéristique avantageuse de l'invention, le procédé comporte en outre une étape consistant à réaliser une rectification de l'alignement des lignes d'écriture à partir des éléments caractéristiques déterminés précédemment (cf. Fig. 4).

Selon une autre caractéristique avantageuse de l'invention, la correction d'alignement consiste à réaliser une ou deux transformations de l'image pour obtenir une rotation d'un angle désiré. Dans le cas de deux transformations, l'une est verticale, l'autre est horizontale de manière à avoir un décalage variable selon les lignes et les colonnes pour obtenir en final des lignes de texte visuellement parallèles entre elles.

Selon une autre caractéristique de l'invention, le procédé comporte une étape de compression des images numérisées à la fin du premier traitement.

Selon une autre caractéristique de l'invention, l'étape A consiste dans le cas où le support est un catalogue imprimé, à saisir les informations page par page de façon automatique par balayage pour obtenir les images numérisées des pages.

Selon une autre caractéristique de l'invention, l'étape A consiste dans le cas où le support est un CD-ROM constitué de pages numérisées enregistrées, à décompresser les informations numérisées pour obtenir les images numérisées des pages.

Selon une autre caractéristique avantageuse, les traitements sont faits en temps réel.

D'autres particularités et avantages de l'invention apparaîtront à la lecture de la description qui est faite à titre illustratif mais nullement limitatif, en regard des dessins sur lesquels :
- la figure 1 illustre de façon schématique les étapes principales du procédé dans une application particulière,
- les figures 2A et 2B illustrent de façon physique l'enchaînement des différentes étapes du procédé,
- la figure 3 illustre schématiquement l'architecture d'un système de consultation d'une banque de données créé conformément au procédé de l'invention,
- les figures 4A et 4B illustrent schématiquement les éléments caractéristiques utilisés pour corriger les défauts d'alignement horizontal ou vertical des lignes d'écriture d'une page de BOPI ou d'une page d'"Official Gazette" digitalisée,
- la figure 5 illustre un dispositif mis en oeuvre dans l'exemple de réalisation.

Les différentes étapes du procédé conforme à l'invention vont être présentées à travers l'application particulière de la création d'une banque de données de brevets d'invention. Il est clair que l'invention s'applique à la création d'une banque de données portant sur d'autres types de documents par exemple (journaux, revues,...etc).

Dans la suite de la description, les supports d'enregistrement utilisés pourront soit être par exemple des catalogues ou des CD-ROM, étant entendu que dans cette application particulière les catalogues seront des publications de documents, par exemple de brevets, tels que des "BOPI", des "Official Gazette", etc.

Les informations imprimées sur différents catalogues sont des abrégés descriptifs de brevets d'invention et des informations administratives concernant les brevets, des informations répertoriant un brevet et comportant par exemple un titre, un ou plusieurs codes de classement et/ou un déposant,... Cette méthode concerne aussi le traitement d'informations des marques et modèles, ces informations étant structurées d'une manière comparable aux brevets.

On entendra par entité, l'abrégé descriptif d'un brevet, cette entité étant dans ce cas identifiée par le numéro du brevet correspondant et de préférence par le numéro de priorité qui va permettre de réaliser un lien avec la famille du brevet. Ainsi chaque entité est indexée.

Les informations alphanumériques imprimées sur les catalogues brevets correspondent à des informations administratives relatives à chaque brevet, comportant généralement un abrégé descriptif d'une invention et généralement un dessin.

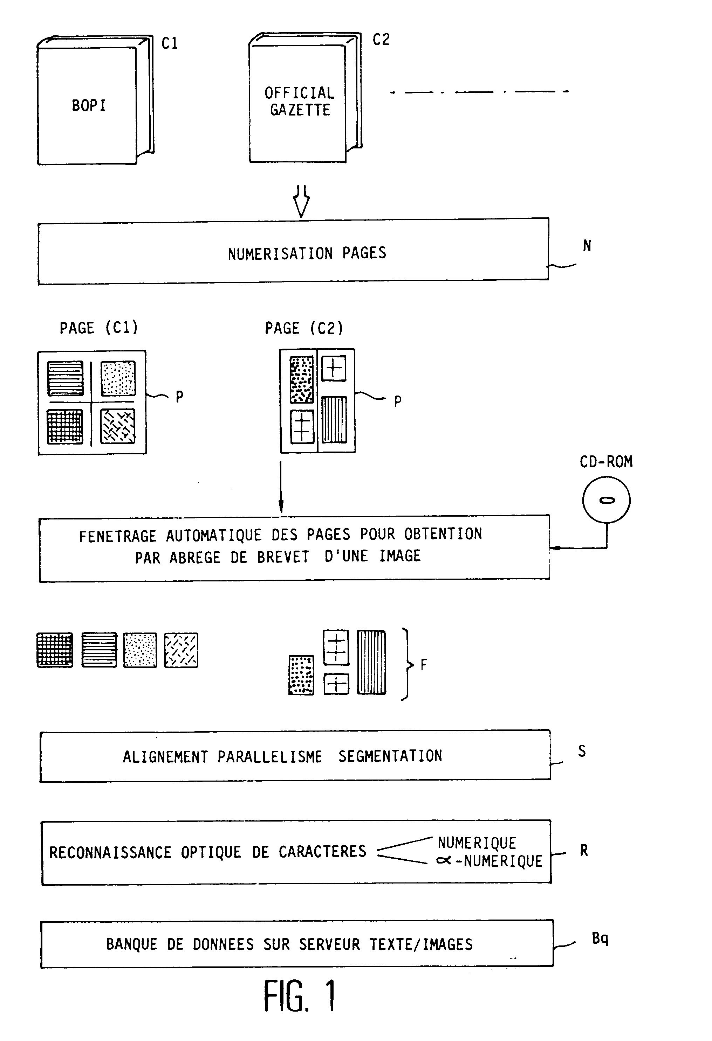

On a représenté sur la figure 1 un schéma illustrant les différents types de supports d'informations C1, C2 et CD ROM à partir desquels sont extraites les informations qui vont être traitées conformément au procédé.

Dans le cas de support papier, on procède à une numérisation des pages (après massicotage des catalogues) au moyen d'un scanner (étape N sur la figure 1), numérisation qui sera de préférence automatique pour un important volume de texte.

On choisit de préférence un scanner rapide à alimentation automatique en page et avec réglage également automatique de la luminosité en fonction de la couleur du papier.

On obtient ainsi des images numérisées des pages, ces images numérisées se présentant sous le format bitmap (matrice de pixels).

Une même page peut comporter des entités différentes et une entité peut se trouver répartie sur différents blocs d'une même page ou même sur deux pages successives (P Fig. 1).

D'autre part, la mise en page de chaque catalogue, c'est-à-dire la présentation en différents blocs des abrégés, est différente selon le type de catalogue.

Conformément à l'invention, on réalise un traitement sur ces pages numérisées dénommé fenêtrage automatique permettant d'obtenir une image bitmap par bloc d'information, la concaténation de ces blocs permettant de constituer une image bitmap par entité, c'est-à-dire par abrégé de brevet.

Dans le cas où le support d'informations est sur un support magnétique ou optique, par exemple un CD-ROM, la numérisation a déjà été réalisée, le prétraitement à ce traitement de fenêtrage consiste uniquement à décompresser les données par tout algorithme connu de décompression correspondant à l'algorithme de compression utilisé.

Après le traitement de fenêtrage F, le procédé consiste à réaliser une correction de l'alignement des lignes d'écriture et également à réaliser une segmentation de l'image (S Fig. 1). Cette segmentation consiste à traiter chaque image de manière à réaliser une nouvelle mise en page et cela par identification de portions de contenu, c'est-à-dire à des pavés d'informations qui sont des paragraphes ou un dessin.

Cette identification est réalisée par une étape de traitement d'images connu pour d'autres domaines consistant à repérer les débuts ou les fins de paragraphes par exemple par des comptages de pixels.

D'autre part, et cela sera détaillé dans la suite, différents éléments caractéristiques des pages sont identifiés en cours de traitement et vont permettre par exemple de réaliser un traitement consistant à rectifier l'alignement des lignes d'écriture.

Dès que cette segmentation est traitée, la rotation est exécutée seulement sur des petits morceaux de texte. La taille de la matrice de rotation est ainsi beaucoup plus petite que si on faisait tourner toute la page. La taille de ce morceau de texte est sans contour parasite, il n'y a que du texte et les bordures vierges de texte sont supprimées. Les dessins reconnus comme tels ne subissent pas de rotation. Cette segmentation est exécutée sur l'ensemble du texte contenu dans la page. Plusieurs pavés de texte sont ainsi détectés par le logiciel de segmentation.

Le logiciel de segmentation sait généralement différencier un texte d'un dessin ou graphique ceci est déjà connu et de nombreuses publications existent sur ce sujet. Toutefois dans le cas de textes ou dessins en monochrome, la digitalisation se fait sans niveau de gris (un pixel est noir ou blanc) ce qui permet d'économiser de la mémoire de traitement. Une rotation apporte des aberrations car il n'est pas possible de redistribuer facilement certains pixels qui étaient pris par exemple comme "blanc" tout en ayant un pourcentage non négligeable de noir, cette information étant perdue. Le dessin est fenêtré mais aucune opération de rotation ne lui est appliqué. Ceci a pour conséquence un gain de temps (économie du temps de rotation) et aucune pollution issues de la rotation.

La somme des temps de rotation est inférieure à la rotation globale de la page puisque les rotations sont exécutées uniquement sur des parties de textes sans bordure et ne comprenant pas le dessin. Ceci est important car le temps de rotation est très important pour la rotation d'une matrice de 3307 par 4677 qui est celle d'une page de 21 centimètres par 29.6 à 400 DPI. La taille de cette matrice impose sur les ordinateurs de pilotage des scanners (du type PC, SUN,.....) des cartes spécialisées ayant la mémoire suffisante et la vitesse de traitement accélérée. Aujourd'hui ce problème est connu et résolu par des transputers. Notre procédé permet éventuellement de se passer de ces transputers.

Le principe de l'indexation automatique des documents est connu, mais sa réalisation pose les problèmes suivants :
- le temps pour réaliser l'indexation,
- la fiabilité de l'indexation,
- son inclusion dans un logiciel particulier.

Ce qui est connu aujourd'hui est basé sur l'utilisation d'un logiciel d'OCR. Une technique de masque est bien plus fiable et son exécution plus rapide. Lors de la digitalisation, un premier contrôle consiste à vérifier que les pages digitalisées sont séquentielles afin de signaler celles qui manquent. Les documents à digitaliser dans notre cas sont connus, donc les polices de caractères, constantes dans le temps, sont aussi connues. Le numéro de page est situé à un emplacement particulier sur ces pages et il s'incrémente séquentiellement à chaque nouvelle page digitalisée. Il est donc possible de fabriquer l'image "bitmap" du numéro de page que l'on s'attend à trouver sur la page suivante et d'appliquer une comparaison entre le numéro de la page fenêtrée et le numéro attendu et calculé par avance. Ce procédé présente les avantages suivants :
- simplicité,
- généralement meilleure fiabilité que les logiciels d'OCR,
- temps de traitement plus rapide,
- inclusion dans un logiciel spécifique plus facile.

Toutefois, il est indispensable de bien vérifier par un contrôle visuel, en temps réel, que la page X manque bien réellement et que ce n'est pas le scanner qui a avalé plusieurs feuilles en même temps. Cette opération sur un scanner rapide (quelques milliers de pages à l'heure) est nécessairement exécutée en temps réel sans l'aide de processeurs particuliers.

Notons que l'OCR à un taux de reconnaissance meilleur sur des caractères ayant été redressés, ce qui pénalise le temps de digitalisation si la rotation est exécutée en temps réel avec la digitalisation. D'autre part la connaissance préalable de la police de caractères permet aussi d'améliorer ce taux de reconnaissance du logiciel d'OCR. Nous connaissons par calcul l'angle qu'il faut appliquer pour redresser la page, nous connaissons aussi le numéro attendu de la page en cours de digitalisation. En fonction de la précision de contrôle il sera possible de fabriquer pour chaque angle (avec un pas de un centième de degré par exemple) dans une plage -5° à +5° cette police. On pourrait également faire tourner l'image bitmat composée de ces caractères. Ce tableau n'est pas important vu qu'il existe seulement dix chiffres. Grâce à cette technique le contrôle des numéros de pages peut être fait sur un petit matériel en temps réel.

De même les numéros de demandes brevets publiés dans les gazettes des différents pays sont généralement séquentiels, ce qui fait que dans un pourcentage important et dépendant du type de document, le numéro de la demande de brevet, clé d'indexation, est connu pour le document en cours de traitement. Ceci permet de bénéficier des avantages cités pour la reconnaissance des numéros de pages.

L'étape suivante consiste à réaliser une reconnaissance optique de caractères de pavés précédemment obtenus (R Fig. 1).

On constitue ainsi des fichiers distincts pour les pages images numérisées, les entités images et les images segmentées.

Toutefois les entités images et segments peuvent être extraites automatiquement par repérage des coordonnées.

On constitue également un fichier pour les images traduites par exemple en code ASCII à l'issue de la reconnaissance optique de caractères.

Compte tenu du volume important des données numérisées, on procèdera après tout traitement à un traitement ultime consistant à compresser ces données.

Comme cela va être détaillé dans la suite, ces différents fichiers pourront être gérés par un serveur de banque de données (Bq Fig.1).

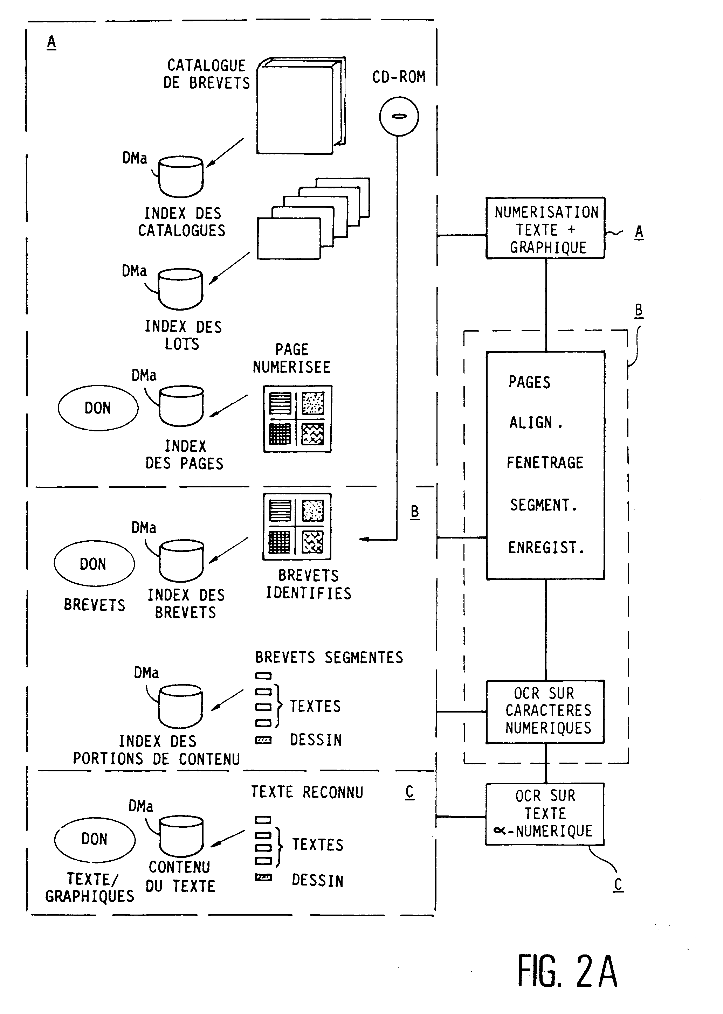

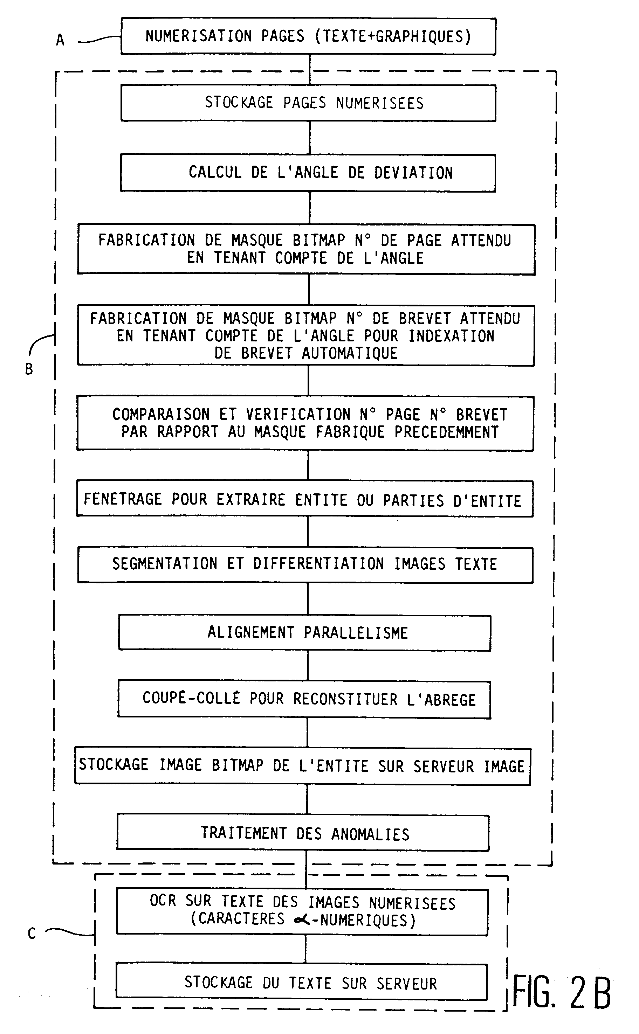

On va maintenant décrire les différentes étapes du procédé de manière plus concrète et plus détaillée, à partir des schémas des figures 2A et 2B.

Le procédé comporte trois étapes essentielles :
A : numérisation
B : traitement et reconnaissance des numéros de pages et de brevets,
C : OCR des textes.

L'ensemble de ces traitements peut être fait en temps réel.

**L'étape A** comporte les sous-étapes A.1, A.2 et A.3 dans le cas de catalogues, uniquement la sous-étape A.3 dans le cas d'un CD-ROM ou autre support d'enregistrement.
**A.1 :** préparation des catalogues : les catalogues, actuellement reliés, sont massicotés et préparés pour la digitalisation. Ces catalogues sont scindés en lots de digitalisation comportant chacun une partie des pages du catalogue. Dans chacun des lots une mire de contrôle est insérée afin de vérifier le réglage du scanner. Le massicotage des pages permet de digitaliser en automatique un lot en utilisant, s'il existe, le dispositif d'insertion frontal automatique des feuilles à digitaliser. Les livres "précieux" seront digitalisés "à plat" sur le scanner. Toutefois, un arrondi dû à la reliure générera une aberration de l'image digitalisée, le document n'ayant pas été digitalisé totalement à plat. Après numérisation et validation, les livres sont de nouveau reliés par un relieur ;
**A.2 :** pré-indexation des lots : il s'agit de la saisie des informations caractéristiques du catalogue à savoir le nombre de pages, le numéro du premier au dernier brevet, etc ;
**A.3 :** numérisation des informations et contrôle : il s'agit de la numérisation proprement dite des pages des catalogues, associée à la reconnaissance optique du numéro de page, dont la localisation dans la page dépend du type de publication et de sa date de publication.

**L'étape B** comporte les sous-étapes suivantes :
**B.1 :** stockage des pages numérisées telles que digitalisées.
   Ce fichier est le reflet exact de l'ensemble des pages du document digitalisé. Les pages comportant des abrégés descriptifs subiront les traitements suivants. Les autres serviront de vérification complémentaire lors de l'étape C : par exemple le nom d'un inventeur se trouve sur l'abrégé et dans les tables récapitulatives, ce qui pourra permettre éventuellement une double vérification ;
**B.2 :** calcul de l'angle de déviation.
   Le scanner peut être utilisé de deux manières :
   - par insertion automatique de pages qui sont successivement digitalisées,
   - ou les pages à digitaliser sont placées manuellement sur la fenêtre du scanner.

   Dans les deux cas, les lignes d'écriture du texte peuvent être digitalisées d'une manière non parallèle à une référence d'origine du scanner soit pour des questions de défaut d'entraînement de papier (papier entraîné de travers), soit parce que le papier n'a pas été posé correctement sur la fenêtre, soit les lignes d'écriture du document à digitaliser ne sont pas parallèles au bords de celui-ci. L'angle qui en résulte, que nous appellerons dans la suite "angle de déviation" est généralement calculé par rapport à une référence particulière du document à digitaliser, ou à défaut par une ligne constituée du bas de certains caractères, comme représenté sur les figures 4A et 4B ;
**B.3 :** fabrication du masque "Bitmap" numéros de pages attendus en tenant compte de l'angle ou OCR.
   Généralement les règles de numérotation des pages d'un document sont précises et connues (numérotation de pages alternées, en haut, en bas...). Les documents à digitaliser sont aussi connus. Il en résulte que l'emplacement où se trouve la numérotation des pages est aussi connu. Il est donc possible d'extraire de la page digitalisée une petite fenêtre comportant la numérotation de la page digitalisée en cours ;
**B.4 :** fabrication du masque "Bitmap" numéros de brevets attendus en tenant compte de l'angle pour indexation de brevet automatique ou OCR.
   Nous connaissons aussi les règles de numérotation des brevets. Pour chaque type de publication à digitaliser, il est possible après examen d'en déduire des règles qui permettront de déterminer à quel endroit physique dans la page se trouve le numéro de brevet, comme représenté sur les figures 4A et 4B. Par exemple, sur le BOPI, le numéro de publication à dix huit mois est la première information de l'abrégé et, généralement, quatre abrégés se trouvent sur la même page.
   De même, sur l' "Official Gazette", un petit trait horizontal permet de séparer deux abrégés. Le numéro de brevet sera généralement en dessous de ce trait.
   Après analyse du type de document digitalisé, il est généralement possible d'en déduire avec certitude où se trouve(nt) sur la page le (ou les) numéro(s) de la (ou des) demande(s) de brevet.
   De même que précédemment, nous pourrons extraire de la page digitalisée la (ou les) fenêtre(s) "Bitmap" correspondante(s).
**B.5 :** comparaison et vérification numéro de page, numéro de brevet par rapport au masque fabriqué précédemment.
   Nous connaissons par avance les règles de fabrication du numéro de brevet. Par exemple, sur le BOPI : à partir d'une certaine date, les numéros de première publication sont croissants avec une augmentation de un à chaque fois. Connaissant la police de caractères, il est donc facile de fabriquer l'image "Bitmap" du prochain numéro de publication et de la comparer avec celle extraite du document digitalisé en cours, tout en tenant compte de l'angle de déviation. Il en est de même pour les numéros de pages qui sont généralement séquentiels. On peut aussi fabriquer, en tenant compte de l'angle de déviation, l'image "Bitmap" de la numérotation de page. Une comparaison entre le numéro de page attendu et le numéro de brevet attendu permet de détecter à ce niveau une anomalie. Cette anomalie peut être due à des pages qui manquent, un défaut de numérotation dans la séquence des brevets ou une mauvaise digitalisation ou une qualité médiocre du document digitalisé. Dans un premier temps l'ambiguité pourra être levée au moyen d'un logiciel d'OCR. Dans le cas contraire une visualisation sera nécessaire.
**B.6 :** fenêtrage pour extraire entités ou parties d'entité.
   Nous allons maintenant extraire tout ce qui concerne les diverses parties qui composent le (ou les) abrégé(s) qui se trouve(nt) sur la page digitalisée. Un fenêtrage tenant compte de l'angle de déviation permet d'extraire sur la page digitalisée les diverses parties qui concernent un abrégé particulier. En effet, nous connaissons le début et la fin de cet abrégé. Les contours parasites composés de pixels non significatifs seront éliminés.
**B.7 :** segmentation reconnaissance images texte.
   Les images "Bitmap" digitalisées fenêtrées précédemment sont composées généralement de pavés comportant des textes et de pavés comportant un ou plusieurs dessins. Le logiciel de segmentation permettra d'effectuer un découpage en tenant compte de l'angle de déviation entre ces pavés de texte et les pavés de dessins.
**B.8 :** alignement parallélisme.
   Nous avons calculé précédemment l'angle de déviation. Nous allons maintenant faire tourner de cet angle, dans le bon sens, seulement les pavés de texte des abrégés concernant la page digitalisée courante. Les pavés de dessins ne subiront aucune opération de rotation. Nous entendons par "texte" du libellé avec éventuellement des formules incluses à l'intérieur du texte.
**B.9 :** coupé-collé pour reconstituer l'abrégé.
   Les différents pavés de texte et de dessin relatifs à l'abrégé subiront une opération de coupé-collé afin de reconstituer selon notre méthode l'abrégé descriptif.
**B.10 :** stockage image "Bitmap" de l'entité sur serveur image.
   On réalise ce stockage avec l'indexation calculée précédemment.
**B.11 :** traitement des anomalies suivant le processus décrit.
   Les pages manquantes ou mal digitalisées seront traitées à part, afin de ne pas pénaliser le rendement de la chaîne industrielle de digitalisation.

### L'étape C

**C.1 :** reconnaissance optique des textes et contrôle : la reconnaissance optique des textes est réalisée sur chaque pavé de chaque brevet et donne lieu à un fichier par exemple en code ASCII. L'analyse des polices de caractères permet en sus de repérer les champs présents dans le pavé de titre (titre du brevet, déposant, etc..) ;
**C.2 :** constitution des fichiers de données/ graphiques : il s'agit de constituer les fichiers issus des sous-étapes **B.7** et **C.1** pour les mettre dans un format éditable d'une part et les associer au fichier image initiale du brevet d'autre part ;
**C.3 :** stockage des documents images et données : les fichiers images issus de la sous-étape **C.2** sont stockés sur support magnétique ou optique numérique ;
**C.4 :** chargement sur serveur : ces fichiers sont ensuite chargés sur un serveur (sur disque magnétique pour les textes et sur disque optique numérique ou magnétique pour les images initiales de chaque brevet ainsi que les fichiers segmentés).

Conformément à un mode de réalisation de l'invention, on constitue un fichier "bitmap" à partir des informations numérisées et un fichier "de type ASCII" à partir de l'étape OCR sur le texte et sur le dessin. Ce fichier ASCII sera conforté par la vérification au moyen de dictionnaires appropriés et l'exploitation des informations contenues dans les tables récapitulatives.

Selon un autre mode de réalisation, comme le taux de reconnaissance obtenu pour le texte par OCR n'est pas de 100 %, on peut conserver seulement le texte présumé sans faute d'orthographe sous forme ASCII et conserver sous forme bitmap les caractères non reconnus ou incertains, les symboles et graphiques sous forme bitmap ; ces informations sont alors chaînées dans un fichier de façon à reconstituer le texte sous sa forme visuelle d'origine.

Ce deuxième mode de réalisation ne correspond pas à une insertion de dessin ou de graphique comme c'est le cas dans les logiciels graphiques du type WORD, mais à un chaînage automatique des caractères non reconnus par l'OCR et conservés sous forme de pavés bitmap.

Un résumé de ces étapes est donné sur la figure 2B.
**On va maintenant détailler des caractéristiques concernant un mode préféré de réalisation :**

### Caractéristiques de la numérisation

- les gazettes étant imprimées en recto-verso, on utilise un scanner recto-verso pour cette opération de balayage. Un scanner simple face peut être utilisé et nécessiterait deux digitalisations, la première concernant les pages en recto, la deuxième concernant les pages en verso,
- le balayage est exécuté sans niveau de gris, c'est-à-dire de manière binaire, le pixel élémentaire étant noir ou blanc. Les publications sont monochromes et possèdent des dessins conçus à base de traits, une digitalisation sans niveau de gris permet un gain de place important (présence ou non d'un pixel). Dans le cas d'un dessin possédant des dégradés ou des couleurs, un codage particulier sur plusieurs bits est nécessaire,
- le réglage de la luminosité et du contraste de numérisation tient compte des différentes couleurs de papier et de l'impression des caractères et dessins qui peuvent être plus pâles ou foncés d'une page à l'autre (seuils variables de détection). Si cette fonction n'existe pas sur le scanner, un détecteur sera rajouté (par exemple : une caméra). Ce détecteur pilotera le réglage du contraste du scanner,
- compte tenu du volume de feuilles à numériser, on choisit de préférence une alimentation automatique ou semi-automatique du scanner ; ce matériel doit aussi pouvoir digitaliser des feuilles de papier d'épaisseur différente ; le nombre de pages à traiter par lots est fonction du bac d'alimentation et de réception du scanner,
- la numérisation se fait avec une finesse de digitalisation choisie en fonction de la taille des caractères à digitaliser et des dessins, c'est-à-dire 400 dpi (16 points/mm) au moins pour garantir une lisibilité suffisante des documents et permettre une reconnaissance optique de caractères (OCR) suffisamment performante ensuite,
- la numérisation se fait par lots de pages, issus de chaque publication ; chaque publication est massicotée ; l'ordre initial des pages est conservé de façon à permettre ultérieurement la reconstitution et la reliure des ouvrages. Il est possible de digitaliser des lots non massicotés. Il faut toutefois traiter les aberrations dues à la reliure et au sens de présentation du document selon qu'il est recto ou verso.

### La compression des images bitmap

Les images numérisées et traitées sont en final comprimées pour que chaque information (entité) occupe sur disque une taille en Kilos octets minimum.

Pour ce faire, et dépendant du type de document, les textes sont généralement conservés en 300 points par pouce et les dessins, plus fins, sont conservés en 400 points par pouce.

Cet ensemble est compressé à un format plus performant que le CCITT groupe 4. Un taux de compression avec une efficacité de 50 donne pour 11 millions d'entités par exemple une taille globale de 100 Giga octets environ.

Diverses méthodes de compression de ce type sont aujourd'hui connues, citons par exemple la méthode des ondelettes.

Une conversion permettra le passage aux algorithmes de compression standard (CCITT groupe 3 ou 4).

Cette méthode doit bien entendu ne pas dégrader l'image par des pertes intempestives de pixels.

La compression d'image n'est pas proportionnelle au carré de la résolution car les parties noires de texte et le dessin sont représentés par plus de pixels, les parties blanches restant constantes.

### La pré-indexation des publications

Chaque publication est pré-indexée dans la banque de données par les critères suivants :
- nom de la publication,
- date de la publication,
- nombre de pages total (lorsqu'applicable),
- plage des numéros de brevets (lorsqu'applicable), c'est-à-dire numéro du premier brevet et du dernier brevet signalés,
- caractéristiques de la publication (selon les structures définies par taille et format des pages, séparateurs de brevets, brevets consécutifs ou non, brevets rangés par ordre croissant ou non, classement numérique ou thématique des brevets, abrégé unique ou multiple, etc...), ces informations étant chargées préalablement et simplement affichées pour contrôle -et éventuellement modification par l'opérateur à partir des données sur les catalogues.

Le procédé vérifie à cette étape que la publication n'a pas déjà été traitée.

Dans certains cas particuliers de documents, il est possible de trouver, pour la même invention et dans la même langue, un ou plusieurs résumés différents. Ces divers résumés sont pris en compte les uns à la suite des autres.

### La constitution des lots de saisie et pré-indexation

Chaque publication fait l'objet de un ou plusieurs lots de saisie (certaines publications comprennent près d'un millier de pages). Chaque lot est constitué, selon les possibilités d'alimentation automatique du scanner, par exemple de 50 pages recto-verso. Chaque lot est numéroté.

Dans la suite, le terme lot désigne un lot de numérisation.

Pour chaque lot, on saisit en sus, en préalable à la numérisation, les informations suivantes, lorsqu'elles sont disponibles :
- numéro de première page,
- numéro de dernière page,
- numéro de premier brevet,
- numéro de dernier brevet.

Le procédé consiste en outre à contrôler en temps réel que ces valeurs sont licites (numéro de pages sans recouvrement avec les lots déjà saisis et correspondant bien à la plage fournie pour la publication, numéros de brevets également conformes à la plage définie pour la publication et non déjà traités dans les lots précédents).

La pré-indexation permet de donner des informations concernant la numérotation des entités. Ces informations servent à contrôler l'étape d'OCR qui permet une indexation automatique du document numérisé. Cette étape d'OCR permet une reconnaissance numérique des numéros des entités. Les possibilités de collision sont généralement levées par ce double contrôle.

L'indexation automatique ne nécessite pas, comme c'est le cas en général lorsque l'on veut numériser un ensemble de documents, d'insérer devant chaque document les références d'indexation de ce document.

De cette façon, cette technique permet de s'affranchir de toute erreur humaine qui pourrait avoir lieu si la saisie et l'insertion étaient manuelles dans la pile initiale numérisée.

Lors de la pré-indexation, la date de publication est saisie une seule fois pour !'ensemble de cette publication. Ceci permet d'enrichir la banque de donnée d'une manière fiable et automatique.

### Le contrôle des numéros de pages

Après numérisation et éventuel redressement, le procédé permet de reconnaître par une technique masque ou à défaut en OCR le numéro de page de chaque page de la publication, dont les caractéristiques sont connues à partir de la publication à traiter :
- son emplacement sur la page (position physique),
- la police de caractères concernée.

Cette reconnaissance est vérifiée selon les critères suivants :
- numéros de pages successifs,
- numéros de pages effectivement inclus dans la plage de numéros de pages du lot.

Dans le cas de manques de pages, le procédé permet d'identifier les pages manquantes pour produire, par publication, la liste des pages manquantes dans un fichier.

### Le fenêtrage automatique

Le fenêtrage est exécuté pour extraire automatiquement sur une page numérisée toutes les informations qui concernent un même brevet, dans le but de reconstituer sur une page unique l'abrégé descriptif initial. Cet abrégé sur la gazette peut se trouver sur deux colonnes, ou une partie au recto de la feuille et la suite au verso, ou à cheval sur deux feuilles,...

A titre d'exemple, les brevets sont édités sur le BOPI à raison généralement de quatre brevets par page, soit huit brevets pour une feuille (en ne tenant pas compte des brevets ayant une éventuelle suite). Le fenêtrage consiste dans ce cas à extraire les huit brevets de cette feuille. S'il existe par exemple un brevet avec une suite, ce sont sept brevets qui sont extraits et le brevet ayant une suite subit une opération de coupé-collé.

Dans le cas de l'utilisation d'un scanner intelligent, le fenêtrage permet de sélectionner automatiquement la zone représentant le numéro de l'entité.

### La segmentation des images

La segmentation a pour but de retrouver dans un fichier bitmap les différents paragraphes qui composent le texte soit de la partie administrative, soit du résumé du brevet. Le critère est soit un saut de ligne ou une ligne pas totalement remplie.

La segmentation a aussi pour but de retrouver dans l'image bitmap le dessin. Ces informations répertoriées, il est possible d'éditer une pile contenant un ensemble de brevets, en pouvant éditer chaque paragraphe ou dessin et en pouvant vérifier si le paragraphe en cours ou le dessin possède une taille qui permette l'édition sur la colonne en cours. Si la taille est trop grande, ce paragraphe ou dessin est imprimé sur une autre colonne ou une autre page. L'objet de cette segmentation est de faciliter les opérations de PAO lors de l'édition d'une gazette personnalisée.

### La rectification d'alignement

Le redressement de l'image ou parallélisme est exécuté afin que chaque ligne d'écriture (au format bitmap) soit parallèle à une référence donnée. On utilise de préférence les lignes ou tirets horizontaux, etc (cf. figures 4A, 4B). Ceci afin de pouvoir couper automatiquement un texte (bitmap) entre deux lignes imprimées d'un même abrégé (entité) au moment de l'édition. Ce réalignement peut être exécuté de manière verticale afin que le début de chaque ligne soit réaligné verticalement.

D'autre part, dans la phase suivante d'OCR, il s'agit de transformer la partie bitmap du texte en ASCII. Le taux de reconnaissance est largement amélioré lorsque les lignes d'écriture sont toutes disposées parallèlement à une référence donnée.

Cette étape évite également les défauts variables de parallélisme de l'image, provoqués par le scanner du fait de l'introduction automatique du papier. Ce défaut est aussi particulièrement nuisible aux opérations de coupé-collé de la PAO.

La feuille ainsi numérisée est redressée par un algorithme de redressement consistant à réaliser deux transformations de l'image pour obtenir une rotation (ou équivalent) d'un angle désiré, l'une verticale, l'autre horizontale selon les lignes et les colonnes et ce, de façon automatique. L'angle désiré est repéré par rapport à une référence horizontale constituée par les traits de séparation des emplacements des abrégés de brevets sur la page.

Cette correction de parallélisme est exécutée seulement après une éventuelle rotation de 90° ou de 270° due au sens d'introduction du papier dans le scanner.

La tolérance de redressement choisie est de un pixel. Cela donne une tolérance de parallélisme variable suivant la longueur du trait de référence. Par exemple, dans le cas de l'Official Gazette (US) le trait de référence mesure environ 20 millimètres, le calcul montre une erreur de parallélisme maximum de 0.2 degré, soit un quart de millimètre pour une colonne de 80 millimètres de large. Les autres documents ont une référence beaucoup plus large.

Si le trait de référence a un graphisme qui n'est pas net, alors la référence sera les deux points extrêmes de ce trait.

Il faut toutefois que l'épaisseur de cette référence soit compatible avec la résolution du scanner, ce qui impose pour une digitalisation à la résolution de 400 points par pouce un trait référence d'une épaisseur minimum de 1/16 millimètre. Par exemple, le trait séparateur de brevets sur l'Official Gazette a une épaisseur minimum de 3/16 de milimmètre, ce qui représente 3 pixels.

Cette rectification n'est pas appliquée sur les pavés de dessins.

### Le procédé permet en outre un contrôle qualité

Différents contrôles sont mis en place pour le suivi des opérations de numérisation, de réalignement et de fenêtrage et de reconnaissance des numéros de brevets.

### 1/ Contrôle pour la numérisation

Le contrôle qualité de la numérisation est fait de la façon suivante :
- numérisation d'une mire de référence, insérée au début et à la fin de chaque lot avec impression de l'image numérisée, compressée, décompressée et imprimée ; une autre méthode consiste à comparer automatiquement l'image de la mire insérée avec l'image de cette même mire préalablement numérisée permettant ainsi de détecter automatiquement le dépassement d'un seuil prédéterminé,
- la rectification d'alignement de cette mire sera aussi exécutée afin que la comparaison soit plus performante,
- impression laser de deux pages consécutives (recto-verso) toutes les N pages recto-verso traitées (N étant paramétrable et variant globalement de 50 à 200),
- affichage, à la demande de l'opérateur, sur écran de contrôle en zoom (agrandissement d'un facteur 2 en A3 pour un écran de 200 dpi par exemple. Ce zoom est fonction de la résolution de l'écran de contrôle) d'une page toutes les P pages traitées des recto seuls ou des verso seuls.

Lorsqu'un défaut est détecté (mire floue ou tachée, pages imprimées ou affichées défectueuses) par l'opérateur, le lot est rejeté et renumérisé. Suivant le cas, le scanner est vérifié et réglé par un opérateur de maintenance.

### 2/ Fenêtrage

Le contrôle qualité du fenêtrage est fait de deux façons :
- systématiquement : par impression d'une page numérisée et des images de chaque brevet reconnu, toutes les P pages traitées (P étant paramétrable et variant par exemple de 50 à 200),
- indirectement, pour certaines publications où les brevets sont présentés en séquences, par contrôle après OCR des numéros de brevets reconnus.

### 3/ Reconnaissance des numéros de brevets

Il y a deux types de contrôles possibles :
- pour les publications à classement par numéros de brevets, sur le fait que les numéros sont croissants, voire sur certaines publications, successifs,
- pour les publications classées par thèmes, sur le fait que les numéros vont croissant par thèmes.

Les numéros non reconnus ou reconnus avec un seuil d'incertitude paramétrable seront listés dans un fichier pour contrôle, que l'opérateur pourra appeler pour contrôle visuel, entité par entité.

Un contrôle sera exécuté par comparaison logique des images raster du numéro de brevet courant avec le numéro de brevet déduit en fonction des règles de numération des numéros de brevets.

Un double contrôle peut aussi en cas de conflit être exécuté par OCR.

Rappelons que dans ce cas, l'OCR est limité seulement à des chiffres (soit 10 possibilités d'erreur au maximum). Par ailleurs, les tables de conflit sont limitées à quelques possibilités qui peuvent être levées par l'étude des courbes et le poids des pixels.

Si malgré cela une incertitude demeure, celle-ci est levée par l'analyse des tables de pré-indexation. Au cas où une incertitude demeure encore, un zoom des caractères ambigus sera effectué sur l'écran de contrôle afin que l'opérateur valide manuellement le bon caractère.

### 4/ Réalignement

Le contrôle qualité du réalignement est effectué de deux façons :
- par un calcul statistique déterminant pour chaque lot de pages traitées, la distribution des rotations effectuées (autour de l'axe supposé des pages : vertical ou horizontal) sur le lot d'une part, ainsi que la même distribution pour le traitement de la publication complète et les valeurs de moyennes et écarts types pour chaque publication,
- par contrôle de visu des images avant et après rotation, pour des valeurs de rotation excédant un seuil paramétrable donné (autour de l'axe supposé de la page).

### 5/ Gestion des lots de digitalisation

A chaque instant, il sera possible de connaître des lots de numérisation :
- dernière opération effectuée (pré-indexation de la publication, du lot, stockage des pages, fenêtrage, etc..),
- statut (à démarrer, en cours, validé),
- heure de début et de fin de chaque opération,
- opérateur et valideur.

### L'édition

Une édition laser des brevets numérisés peut être exécutée sous forme "gazette". La sélection des brevets devant figurer dans une gazette pourra être faite soit :
- à partir d'un fichier ACSII contenant une liste de numéros de brevets,
- à partir d'un tri fait par interrogation de la banque de données par numéros de brevets, date de publication ou thème.

Si lors d'un tri par thème et date de publication l'on ne souhaite pas éditer certains brevets, il doit être possible de les retirer automatiquement de la gazette. Par exemple, si pour le thème X on obtient un ensemble E de 100 brevets et que l'on souhaite n'éditer que 85 brevets de cet ensemble E, l'on peut faire une sélection des 15 brevets non désirés soit en entrant simplement les numéros de brevets, soit en "cliquant" avec une souris sur ces 15 brevets dans la liste des 100 brevets sélectionnés.

Les brevets sont imprimés de préférence sur une imprimante laser en 300 dpi.

La plupart de ces publications comportent des dessins très fins et petits, donc difficiles à lire.

Le procédé conforme à l'invention permet d'améliorer la lisibilité des dessins et cela sans interpolation ni aberration de l'image.

Prenons par exemple un dessin d'un format 1 pouce carré. Ce dessin est représenté par une matrice de pixels de 400 par 400. Si l'on imprime sans traitement préalable, cette matrice avec une imprimante laser de résolution 300 dpi, 1 pixel sur 4 est perdu.

Au contraire, conformément à l'invention, on réalise un agrandissement de l'image par impression de l'ensemble des pixels dans le rapport 400/300.

Les dessins n'occupant pas tout l'espace disponible subissent en outre un zoom de puissance calculée automatiquement en fonction des marges.

### L'affichage

L'affichage des documents images est réalisé sur écran haute résolution (de l'ordre de 100 DPI) ou de préférence 200 DPI sur écran d'une taille 19 pouces par exemple, avec fonctionnalités de zoom (variable jusqu'à quatre fois plus grand), rotation, déplacement de l'image par "scrolling" horizontal et vertical.

### Le stockage

Le stockage des pages et brevets images se fait sur DON 12 pouces de grande capacité. Chaque DON est sauvegardé (recopié). Les DON comprennent également les index permettant de reconstituer le contenu du disque -en cas de démontage du lecteur et/ou arrêt intempestif. Des utilitaires permettent de recopier un fichier de DON à disque magnétique, de DON à bande magnétique, de DON à DON et réciproquement.

### La phase OCR

La phase C du procédé consiste à procéder à la reconnaissance optique de caractères des textes des abrégés descriptifs des brevets. Cette opération revêt plusieurs particularités :
- les polices de caractères sont connues pour chaque type de catalogue ; elles correspondent d'ailleurs pour la partie administrative de la description du brevet à des champs différents : titre, déposant, inventeur, etc..,
- la reconnaissance optique de caractères fournit des fichiers textes ASCII sans fin, a priori sans structure particulière pour chargement dans une banque de données externes ; c'est pourquoi on choisit de préférence un logiciel d'OCR (terme explicité page 29) capable de reconnaître également les différentes polices, ce qui en outre facilite la structuration des données.

### La banque de données peut être gérée par un serveur

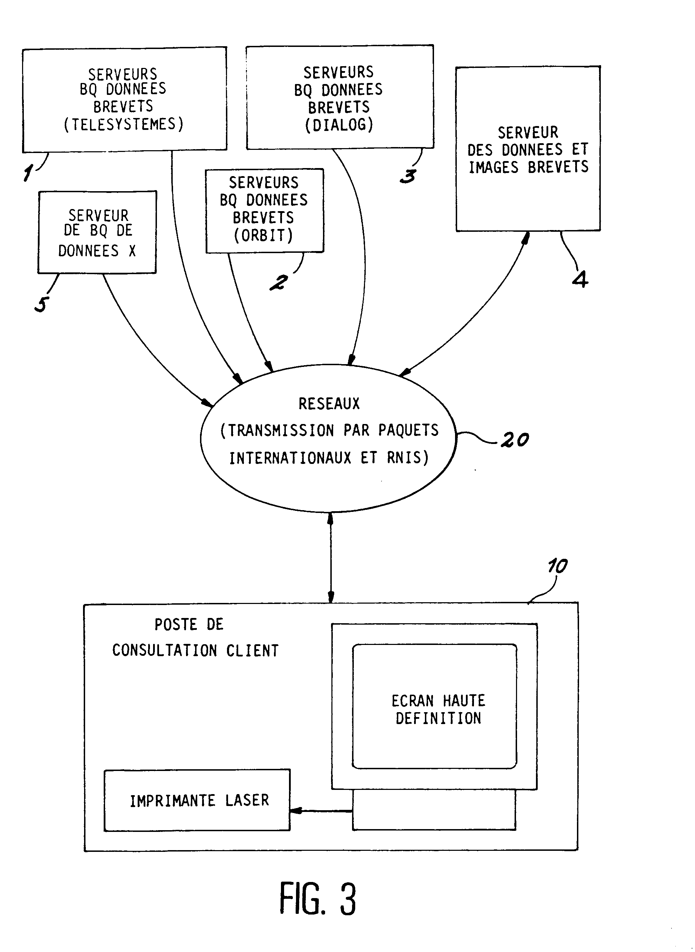

On se reporte pour la suite de la description à l'architecture représentée sur la figure 3.

A l'issue de la saisie initiale des publications, les fichiers de banques de données et des documents brevets-images et brevets segmentés sont chargés sur un serveur pour hébergement (données sur disque magnétique et images sur DON de grande capacité : 3,2 Go par face par exemple) ou disque magnétique de grande capacité et de technologie fiable, par exemple les disques à tolérance de panne.

La banque de données peut ensuite être enrichie des données textuelles et des informations administratives.

### Postes de consultation clients (10)

Ces postes de travail seront similaires aux postes de consultation/édition/impression auxquels est adjoint un logiciel classique d'interrogation et un modem pour une interrogation "intelligente" des banques de données externes (recherche) sur le serveur 1, recherche complémentaire sur les serveurs 2, 3, 4 et 5.

En conclusion, les étapes A et B du procédé correspondent à une numérisation de masse de documents pour la création d'une banque de données images.

A cette numérisation s'ajoute le découpage des pages des catalogues en entités, la reconnaissance de caractères (OCR) portant uniquement sur les numéros de brevets.

Chaque brevet, identifié par son numéro, est associé à l'image numérisée de la page initiale comportant les éléments textuels (informations administratives et résumé) et le dessin.

A partir de l'image numérisée associée à chaque brevet, l'étape C permet d'extraire les informations textuelles, de les analyser afin de reconnaître des informations élémentaires qui seront rangées dans la banque de données documentaires textuelles.

Cette banque de données permet une recherche documentaire et peut donc être interrogeable par mots clés ; elle est en fait le complément de la banque de données images constituée lors des étapes A et B.

La banque de données globale -textuelles et images- et réalisée en A, B, C, est de préférence implantée sur un serveur 4 (Fig. 3).

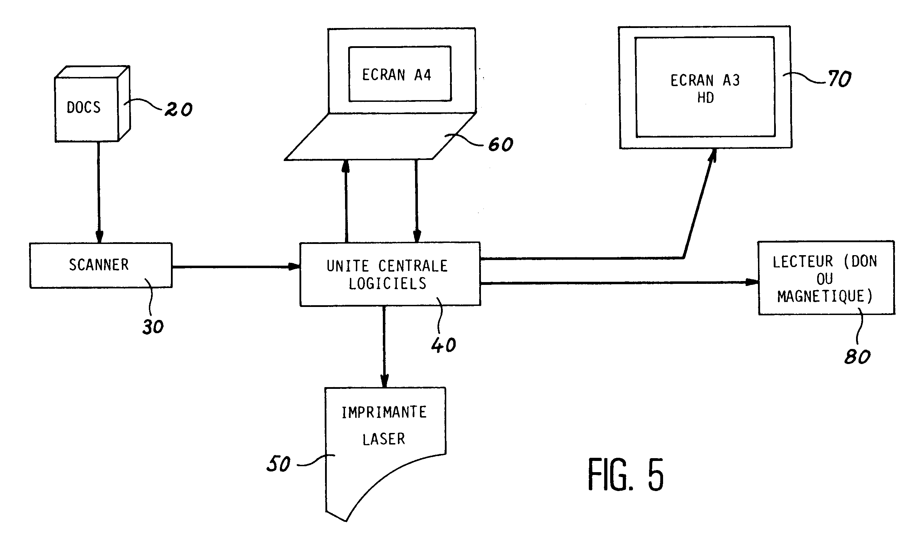

Les étapes A, B et C du procédé de traitement d'informations alphanumériques et graphiques conforme à l'invention peuvent être mises en oeuvre au moyen du dispositif représenté sur la figure 5. Ce dispositif comporte les ensembles fonctionnels suivants :
- un sous-système de numérisation des documents comprenant un poste de travail doté d'un scanner rapide, d'un écran haute résolution et d'une imprimante laser,
- un sous-système de traitement des images numérisées,
- un sous-système de stockage des documents pour le stockage sur disques optiques numériques des fichiers images, sur disques magnétiques et supports de grande capacité pour la banque de données,
- un sous-système de consultation/édition impression de documents, comprenant un poste de travail constitué d'un écran haute résolution, d'une imprimante laser et d'un accès aux banques de données par un réseau l'acceptant, par exemple le réseau téléphonique commuté ou le RNIS ou Numeris.

La notion de sous-système est ici logique et ne correspond pas nécessairement à des équipements distincts.

De manière plus structurelle, le dispositif comporte :
- un scanner 30 pour la numérisation des documents 20,
- un ordinateur avec unité centrale et logiciels 40 de traitement des images numérisées (rotation, alignement, découpage, OCR, PAO...), un écran 60 pour le pilotage de logiciels écran pour la visualisation des images numérisées, traitées et mise en page sous forme de gazette,
- un lecteur DON 80 ou disque magnétique (pour la sauvegarde des images bitmap),
- une imprimante 50 laser (pour l'impression des gazettes, images bitmap,...).

Pour la mise en oeuvre de l'étape C, ces moyens peuvent comporter en outre :
- un serveur de banque de données des références textuelles des brevets,
- un serveur de documents images,
- des "postes" de consultation/édition pour les clients du système, comparables par leur fonction aux postes mis en place pour la consultation/ édition/impression des étapes A, B, mis à part le logiciel d'interrogation de banque de données multi-serveur tel que Télésystèmes-Questel et Orbit-Pergamon, Infoline, Dialog notamment.

L'utilisation du système complet (procédé et matériel de mise en oeuvre) est schématisée en figure 3 :
- depuis le "poste client" de consultation 10, l'utilisateur interroge les serveurs de banques de données de brevets (Télésystèmes-Questel, etc.) et stocke localement les numéros des brevets pertinents par rapport à sa question. Il a également la possibilité d'interroger la banque de données documentaires sur tous les mots des abrégés des brevets hébergés sur le serveur 4, pour obtenir également une liste de numéros de brevets pertinents pour sa recherche,
- il visualise ensuite s'il le désire les brevets sous forme d'images et décide ou non de les conserver dans le lot ainsi constitué, par simple sélection des numéros de brevets dans la liste du lot,
- il décide ensuite s'il le désire d'éditer ces brevets pour reconstituer un catalogue "personnalisé". Dans ce cas, il télédécharge les brevets pertinents sous forme éditable, les édite et produit une "gazette" (un catalogue comprenant les textes des abrégés descriptifs et les dessins associés) ; cette gazette peut être imprimée sur une imprimante laser associée au poste de consultation (ou déportée chez un prestataire de service).

Afin de rendre homogène la banque de données, les divers brevets d'une même famille cohabitent dans cette banque. Ceci permet le choix du membre de la famille par l'utilisateur. Ainsi, un même document existant en langue française ou anglo-américaine peut être édité au choix de l'utilisateur. De plus, les gazettes PCT existent en deux langues : le Français et l'Anglais. Afin de rendre la banque de données multilingue (au minimum française, anglaise et américaine), les gazettes PCT rédigées en Anglais sont enregistrées dans la banque de données.

## Revendications

1. Procédé de traitement d'informations alphanumériques et graphiques enregistrées sur un support sous forme de pages pour constituer une banque de données interrogeable par des moyens d'interrogation et obtenir l'édition d'informations par des moyens d'édition, caractérisé en ce qu'il comporte les étapes automatiques suivantes :
A) détermination de pages images numérisées sous forme de matrices de pixels à partir des informations alphanumériques et graphiques enregistrées sur le support ;
B) une première phase de traitement des pages images numérisées comprenant :
- la détermination d'éléments caractéristiques sur chaque page image numérisée qui permettra de localiser :
. la pagination,
. la (ou les) clef(s) d'indexation,
- la détermination par calcul de l'angle de déviation qu'il faudra appliquer afin de redresser ultérieurement chaque zone d'image numérique comportant seulement du texte ou des formules,
- la fabrication, en tenant compte de l'angle de déviation, pour certains éléments caractéristiques de chaque page image numérisée, d'un masque que l'on s'attend à trouver concernant la pagination et l'indexation,
- l'identification des éléments caractéristiques de chaque page image numérisée en vue de la comparaison et de la vérification avec le masque attendu et calculé à l'avance,
- un fenêtrage tenant compte de l'angle de déviation, par détermination des éléments caractéristiques et des repères de pages, de blocs d'informations, contenus sur une ou plusieurs pages, relatifs à une même entité,
- la segmentation des images de manière à identifier les pavés correspondant à des portions de texte ou de graphique, de façon à les enregistrer séparément,
- la rectification et l'alignement des pavés de texte en tenant compte de l'angle de déviation,
- la reconstitution des entités à partir des portions de contenu de texte rectifié et de graphique non rectifié de façon à les enregistrer séparément pour pouvoir les recomposer selon une mise en page désirée,
- l'enregistrement sur fichiers des pages images numérisées, des entités images numérisées, des images segmentées, numérisées susceptibles d'être éditées,
- le traitement manuel des anomalies de numérisation, pagination, indexation, segmentation, alignement.
C) une deuxième phase de traitement consistant à réaliser une reconnaissance optique de caractères des pavés relatifs aux informations alphanumériques à partir des images segmentées et enregistrement des données sur un fichier constituant une banque de données interrogeable.

2. Procédé de traitement d'informations selon la revendication 1, caractérisé en ce que l'étape A comporte en outre une étape de pré-indexation consistant à connaître le nombre de pages du document initial numérisé et les numéros de la première et de la dernière entités qui se trouvent sur ce document.

3. Procédé de traitement d'informations selon la revendication 1, caractérisé en ce que la correction d'alignement consiste à réaliser deux transformations de l'image pour obtenir la rotation ou équivalent d'un angle désiré, l'une verticale, l'autre horizontale, de manière à avoir un décalage variable selon les lignes et le colonnes.

4. Procédé de traitement d'informations selon l'une quelconque des revendications précédentes, caractérisé en ce qu'il comporte une étape de compression des images numérisées à la fin du premier traitement.

5. Procédé de traitement d'informations selon l'une quelconque des revendications précédentes, caractérisé en ce que l'étape A consiste dans le cas où le support est un catalogue imprimé, à saisir les informations page par page de façon automatique par balayage pour obtenir les images numérisées des pages.

6. Procédé de traitement d'informations selon l'une quelconque des revendications 1 à 4, caractérisé en ce que l'étape A consiste dans le cas où le support est un enregistrement magnétique ou numérique constitué de pages numérisées enregistrées, à décompresser les informations numérisées pour obtenir les images numérisées des pages.

7. Procédé de traitement d'informations selon l'une quelconque des revendications précédentes, caractérisé en ce que les entités sont des abrégés de brevets contenus sur des catalogues de publication et en ce que les éléments caractéristiques déterminés sont des informations administratives relatives à chaque abrégé, des séparateurs de blocs d'informations.

8. Dispositif pour la mise en oeuvre du procédé de traitement d'informations caractérisé en ce qu'il comporte :
- un scanner (30),
- un ordinateur (40, 60) de pilotage de ce scanner comportant éventuellement un système de transputers pour améliorer les performances,
- une console de visualisation graphique (70),
- une imprimante laser (50) d'interface vidéo par exemple,
- un sous-système d'archivage et d'interrogation des données (40, 70, 80),
- un sous-système d'archivage et d'interrogation de la banque de données (40, 60, 80, 70),
le dispositif permettant ainsi de stocker, d'extraire et de télédécharger des images comportant des textes et dessins digitalisés.
